# EUROPÄISCHE PATENTSCHRIFT

(11) **EP 1 785 221 B1**
(45) Veröffentlichungstag und Bekanntmachung des Hinweises auf die Patenterteilung: **24.02.2010**
(21) Anmeldenummer: 06405475.2
(22) Anmeldetag: 10.11.2006
(51) Int. Cl.: B23P 19/04, B27M 3/00

(54) **Vorrichtung zum Ausrichten und/oder Fixieren von zu reparierenden Paletten und/oder Palettenteilen**
Device for aligning and/or fixing of pallets and/or pallet parts to be repaired
Dispositif d'alignement et/ou de fixation des palettes et/ ou des éléments des palettes à réparer

(30) Priorität: 14.11.2005 CH 18182005
(43) Veröffentlichungstag der Anmeldung: 16.05.2007
(73) Patentinhaber: Holliger Paletten Logistik AG, 5706 Boniswil (CH)
(72) Erfinder: Holliger, Robert, 5706 Boniswil (CH)
(74) Vertreter: Rottmann, Maximilian

(56) Entgegenhaltungen:
- EP-A- 1 547 724
- EP-A2- 0 031 759
- WO-A-01/89781
- DE-A1- 4 308 580
- DE-A1- 10 015 636
- DE-A1- 19 822 229

## Beschreibung

Die vorliegende Erfindung bezieht sich auf eine Vorrichtung zum Ausrichten und/oder Fixieren von zu reparierenden Paletten und/oder Palettenteilen nach dem Oberbegriff des Anspruchs 1. Eine solche Vorrichtung ist aus der WO 01/89781 bekannt.

Aus der DE-A-43 08 580 ist ein Verfahren sowie auf eine Vorrichtung zur Reparatur beschädigter Paletten bekannt. Die beschädigte Palette wird dazu in nach oben gekehrter Stellung auf einem Maschinentisch positioniert und fixiert. Danach werden die beschädigten Tragklötze und Latten mittels einer Trennvorrichtung herausgetrennt, welche in drei Koordinatenachsen verschiebbar gelagert ist. Die Trennvorrichtung weist einen Maschinenkopf auf, der mit einem senkrechten Antriebsschaft versehen ist, an dem endseitig ein rotierendes Kreissägeblatt angebracht ist. Der Durchmesser des Kreissägeblatts wird so gewählt, dass dieses kleiner ist als die lichte Weite zwischen den in Längsrichtung verlaufenden Reihen von Tragklötzen. Dadurch lässt sich das Kreissägeblatt zwischen die in Längsrichtung verlaufenden Reihen von Tragklötzen einbringen, so dass gezielt die beschädigten Teile der Palette herausgesägt werden können. Beim Heraustrennen der beschädigten Teile werden die Befestigungsmittel - Nägel- durchtrennt. Nachdem die beschädigten Teile herausgetrennt sind, wird die Palette einer Beschickungs- und Befestigungsstation zugeführt, wo die zu ersetzenden Teile an die entsprechende Stelle zugeführt und positioniert werden. Die eigentliche Befestigung der neuen Teile erfolgt mittels zwei Nageleinrichtungen, die gleichzeitig von oben und unten Nägel einschlagen.

Aus der DE-A-198 22 229 ist ebenfalls ein Verfahren und eine Vorrichtung zur Reparatur beschädigter Paletten aus Holz bekannt. Hier werden in einem ersten Arbeitsschritt die beschädigten Bretter und/oder Kufen von der zu reparierenden Palette abgetrennt. In einem nächsten Arbeitsschritt werden die neuen Teile auf die Palette ausgerichtet und danach vernagelt. In einem weiteren Arbeitsschritt werden die Paletten gepresst, so dass allenfalls überstehende Nägel sowie nicht ganz anliegende Bretter angepresst werden. Die Vorrichtung zum Durchführen dieser Verfahrensschritte umfasst einen Zuförderer zum Zuführen der Paletten, einen Entstapler zum Vereinzeln der Paletten, eine Demontagestation zum selektiven Abtrennen der defekten Teile, eine Bestückungsstation zum Ersetzen der defekten Teile, eine Zentrier- und Nagelstation zum Befestigen der ersetzten Teile sowie eine Anpressstation zum Anpressen von überstehenden Nägeln sowie nicht ganz anliegenden Brettern. Die Zentrier- und Nagelstation dient u.a. dem exakten Positionieren der ersetzten Kufen bzw. Deckbretter. Dazu ist die Zentrier- und Nagelstation mit drei Zentrierkanälen zur Aufnahme der drei Kufen einer Palette versehen. Der rechte Zentrierkanal ist mit einer festen Aussenwand und einer mittels federbelasteten Stösseln beweglichen Innenwand versehen, während der mittlere Zentrierkanal zwei bewegliche Seitenwände aufweist, die über federbelastete Stössel nach innen gedrückt werden. Die Federkräfte der die beiden Seitenwände belastenden Stössel sind so ausgelegt, dass die mittlere Kufe relativ zur festen rechten Aussenwand positioniert wird. Schliesslich weist der linke Zentrierkanal je eine mittels federbelasteten Stösseln bewegliche Innen- und Aussenwand auf, welch letztere höher ist als die Palette. Dadurch soll erreicht werden, dass die gesamte Palette mitsamt ihrer linken Kufe auf die feste Aussenwand gedrückt und so positioniert wird.

Die Erfindung zielt darauf ab, eine Vorrichtung zum Ausrichten und/oder Fixieren von zu reparierenden Paletten und/oder Palettenteilen nach dem Oberbegriff des Anspruchs 1 derart weiterzubilden, dass die neu an der Palette anzubringende Palettenteile und/oder allenfalls verschobene und/oder verdrehte Palettenteile, insbesondere Bodenbretter und/oder Verbindungsklötze, lagegerecht ausgerichtet und fixiert werden, so dass sie durch das Anbringen von neuen Verbindungselementen schnell und einfach in ihrer Sollposition befestigt werden können.

Zur Lösung dieser Aufgabe wird eine Vorrichtung bereitgestellt, welche die im Kennzeichen des Anspruchs 1 angeführten Merkmale aufweist.

Vorzugsweise wird durch die Vorrichtung gemäss Anspruch 4 sichergestellt, dass die Aussenmasse der Palette innerhalb eines vorgegebenen Nennmasses liegen.

Weitere bevorzugte Ausführungsformen der Vorrichtung sind in den abhängigen Ansprüchen 2, 3 und 5 bis 10 umschrieben.

Ein bevorzugtes Ausführungsbeispiel der erfindungsgemässen Vorrichtung wird nachfolgend unter Bezugnahme auf die beiliegenden Zeichnungen näher erläutert. Dabei zeigt:
- Fig. 1: eine Palette 1 in einer perspektivischen Ansicht;
- Fig. 2: eine teildemontierte Palette zusammen mit einer neuen Kufe;
- Fig. 3: eine perspektivische Ansicht der Vorrichtung zum Ausrichten und Fixieren von zu reparierenden Paletten und Palettenteilen;
- Fig. 4: die Vorrichtung gemäss Fig. 3 in einer perspektivischen Ansicht zusammen mit einer darin aufgenommenen Palette;
- Fig. 5: einen Querschnitt durch die Vorrichtung gemäss Fig.3;
- Fig. 6: einen Längsschnitt durch die Vorrichtung gemäss Fig.3;
- Fig. 7: einen Querschnitt durch die sich im Ausgangszustand befindliche Vorrichtung mit einer darin aufgenommene Palette;
- Fig.8: einen Längsschnitt durch die sich im Ausgangszustand befindliche Vorrichtung mit einer darin aufgenommene Palette;
- Fig. 9: einen Querschnitt durch die sich im Wirkzustand befindliche Vorrichtung mit einer darin aufgenommene Palette, und
- Fig. 10: einen Längsschnitt durch die sich im Wirkzustand befindliche Vorrichtung mit einer darin aufgenommene Palette.

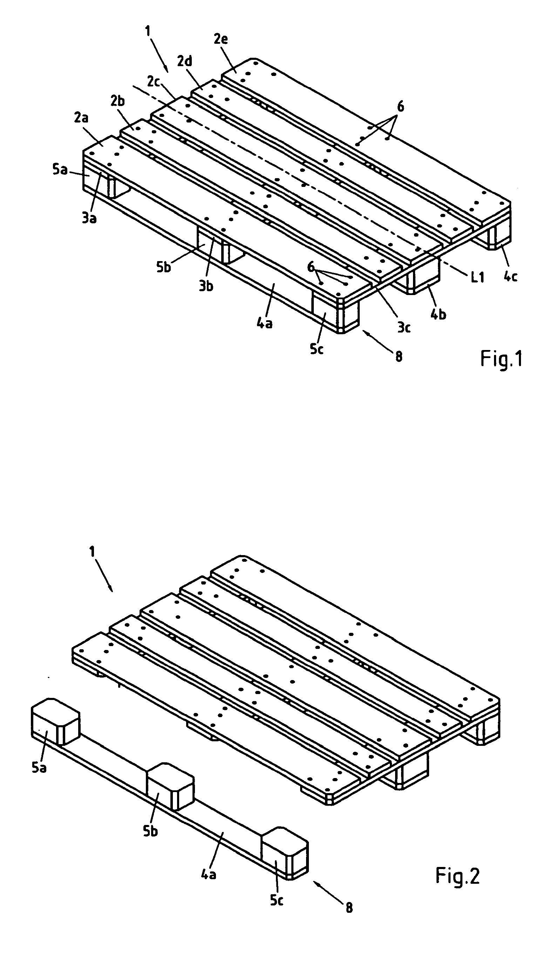

Die Fig. 1 zeigt eine Palette 1 in einer perspektivischen Ansicht. Die hier dargestellte Euro-Palette 1 ist ausschliesslich aus Holzteilen gefertigt und besteht aus fünf in Längsrichtung verlaufenden Deckbrettern 2a-2e, drei darunter quer angeordneten Querbrettern 3a-3c sowie drei in Längsrichtung verlaufenden Bodenbrettern 4a-4c. Jedes Bodenbrett 4a ist mittels drei Verbindungsklötzen 5a-5c mit den drei Querbrettern 3a-3c verbunden. Von den fünf Deckbrettern sind die beiden innen liegenden Deckbretter 2b, 2d schmaler ausgebildet als die beiden äusseren und das mittlere Deckbrett 2a, 2c, 2e. Die einzelnen Paletten-Teile sind mittels Verbindungselementen in Form von Nägeln 6 miteinander verbunden, wobei sowohl von der Oberseite wir auch von der Unterseite her Nägel eingeschlagen sind. Die von der Oberseite eingeschlagenen Nägel 6 verbinden das jeweilige Deckbrett 2a-2e mit dem darunter liegenden Querbrett 3a-3c sowie dem zugehörigen Verbindungsklotz, während die von der Unterseite eingeschlagenen Nägel das jeweilige Bodenbrett 4a-4c mit dem zugehörigen Verbindungsklotz verbinden. D.h. ein von oben eingeschlagener Nagel durchdringt sowohl das jeweilige Deck- wie auch das Querbrett und ist im Verbindungsklotz verankert, während ein von unten eingeschlagener Nagel das jeweilige Bodenbrett durchdringt und im entsprechenden Verbindungsklotz verankert ist. Die von unten eingeschlagenen Nägel sind aus dieser Darstellung nicht ersichtlich. Die Palettenlängsachse ist mit L1 bezeichnet.

Die Fig. 2 zeigt eine Palette 1 in teildemontiertem Zustand. Namentlich fehlt eine Kufe, welche in einem vorangehenden Schritt entfernt wurde, beispielsweise durch Durchtrennen der Nägel unterhalb der drei Querbretter 3a, 3b, 3c. Eine die abgetrennte Kufe zu ersetzende neue Kufe 8 ist separat dargestellt.

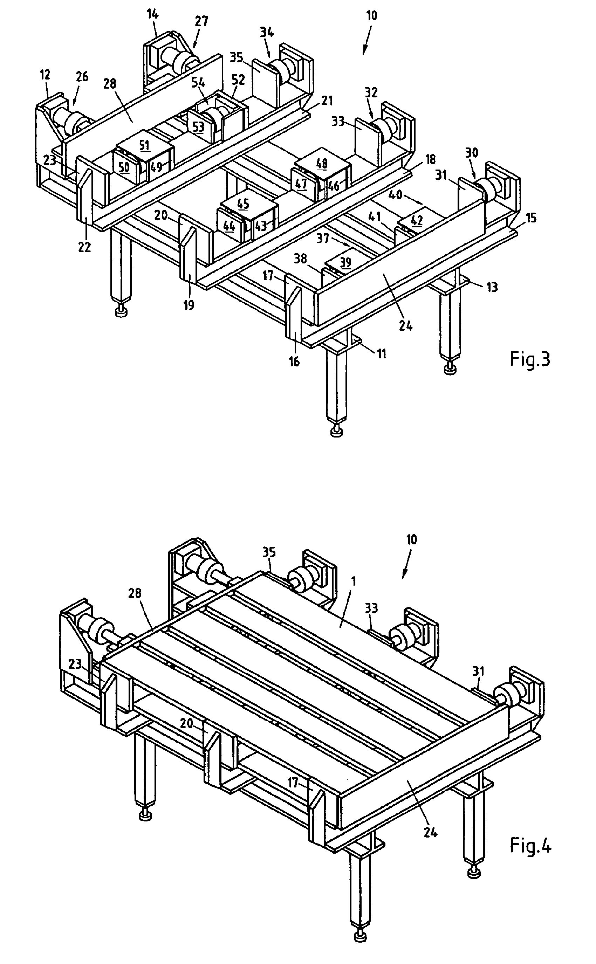

Fig. 3 zeigt eine perspektivische Ansicht der Vorrichtung 10, welche dem Ausrichten und Fixieren von Paletten und Palettenteilen dient. Die hier gezeigte Vorrichtung eignet sich insbesondere zum Ausrichten und Fixieren von Euro-Holzpaletten sowie Teilen davon. Die Vorrichtung dient einerseits dazu, die zu reparierende Palette sowie die ggf. neu daran anzubringenden Teile positionsgenau auszurichten und zu Fixieren, damit die neuen Palettenteile mittels Verbindungselementen -Nägeln- an der Palette befestigt werden können und/oder zusätzliche Verbindungselemente zum Stabilisieren der Palette angebracht werden können. Die Vorrichtung kann aber auch dazu verwendet werden, um einzelne Palettenteile, insbesondere Bodenbretter und/oder Verbindungsklötze, lagegerecht auszurichten und derart zu fixieren, dass sie durch das Anbringen von neuen Verbindungselementen in der korrekten Position an der Palette fixiert werden können. Dies kann beispielsweise zum Reparieren von sogenannten Lotterpaletten vorteilhaft sein.

Die im Ausgangszustand dargestellte Vorrichtung 10 besteht aus einem Grundgestell, das u.a. vier Füsse, zwei Längsträger 11, 13 sowie drei Querträger 15, 18, 21 aufweist. Der jeweilige Querträger 15, 18, 21 ist im wesentlichen L-förmig ausgebildet, wobei sich der jeweilige Basisteil 16, 19, 22 in vertikaler Richtung erstreckt und einen festen Queranschlag 17, 20, 23 bildet, an welchem sich eine Palette mit ihrer Längsseite anlegen kann. Der eigentliche Queranschlag 17, 20, 23 wird jeweils durch eine rechteckige Platte gebildet. Die Oberseiten der Querträger 15, 18, 21 bilden zugleich die Auflageflächen für die Bodenbretter einer Palette, wie nachfolgend noch erläutert wird. An dem vordersten Querträger 15 ist ein Längsanschlag 24 in Form einer Leiste fest angeordnet, welche unter einem rechten Winkel zu den vorgängig genannten Queranschlägen 17, 20, 23 verläuft. Dieser Längsanschlag 24 bildet einen festen Anschlag für die Stirnseite der Palette. Der vorderste Queranschlag 17 bildet zusammen mit dem genannten Längsanschlag 24 zudem einen festen Referenzpunkt für die aufzunehmende Palette.

Die beiden Längsträger 11, 13 sind ebenfalls im wesentlichen L-förmig ausgebildet, wobei an dem jeweiligen Basisteil 12, 14 je ein Hydraulikzylinder 26, 27 abgestützt ist. An diesen beiden Hydraulikzylindern 26, 27 ist ein beweglicher Längsanschlag 28 in Form einer weiteren Leiste befestigt, mittels welchem die Palette in Richtung des festen Längsanschlags 24 gedrückt werden kann.

An dem dem festen Queranschlag 17, 20, 23 gegenüberliegenden Ende des jeweiligen Querträgers 15, 18, 21 ist jeweils ein über einen Hydraulikzylinder 30, 32, 34 betätigbarer, beweglicher Queranschlag 31, 33, 35 angeordnet, der auch in diesem Fall durch eine rechteckige Platte gebildet wird. Somit begrenzen die genannten drei festen Queranschläge 17, 20, 23 zusammen mit den drei beweglichen Queranschlägen 31, 33, 35 und dem festen sowie dem beweglichen Längsanschlag 24, 28 eine rechteckigen Aussparung zur Aufnahme einer Palette.

Neben den drei genannten festen Queranschlägen 17, 20, 23 am Ende des jeweiligen Querträgers 15, 18, 21 umfasst die Vorrichtung noch sechs weitere feststehende Queranschläge 37, 40, 43, 46, 49, 52. Somit sind insgesamt neun feststehende Queranschläge 17, 20, 23, 37, 40, 43, 46, 49, 52 vorgesehen, deren Position auf die insgesamt neun Verbindungsklötze einer Palette abgestimmt ist. Jedem dieser neun feststehenden Queranschläge 17, 20, 23, 37, 40, 43, 46, 49, 52 ist ein verschiebbarer Queranschlag 31, 33, 35, 38, 41, 44, 47, 50, 53 zugeordnet, der jeweils mittels eines Hydraulikzylinders verschiebbar ist. Durch die paarweise Anordnung eines festen mit einem beweglichen Queranschlags soll sichergestellt werden, dass sowohl die drei Bodenbretter wie auch die neun Verbindungsklötze einer Palette parallel zueinander ausgerichtet und fixiert werden können. Da zudem jedes Bodenbrett wie auch die drei zugehörigen Verbindungsklötze gegen einen festen Queranschlag 17, 20, 23, 37, 40, 43, 46, 49, 52 gedrückt werden können, werden die drei Bodenbretter und die neun Verbindungsklötze nicht nur parallel zueinander ausgerichtet, sondern deren Position quer zur Längsmittelachse der Palette wird auch absolut festgelegt. Dadurch eignet sich die Vorrichtung einerseits zum Reparieren von sogenannten Lotterpaletten, bei denen die Position der Bodenbretter wie auch der Verbindungsklötze überprüft bzw. festgelegt oder korrigiert werden muss. Andererseits eignet sich die Vorrichtung insbesondere auch zum positionsgenauen Anbringen von Bodenbrettern und/oder Verbindungsklötzen und/oder Kufen, da die genannten Teile durch die insgesamt neun verschiebbaren Anschläge sowohl festgeklemmt wie auch quer zur Längsmittelachse positioniert werden. Natürlich eignet sich die Vorrichtung auch um Querbretter und Deckbretter anzubringen.

Über den sechs innerhalb der Aussparung angeordneten Hydraulikzylindern zum Verschieben der beweglichen Queranschläge 38, 41, 44, 47, 50, 53 ist je eine Stützplatte 39, 42, 45, 48, 51 angeordnet, auf welcher sich die Palette mit ihren Querbrettern abstützen kann. Bei dem in Blickrichtung gesehen hintersten Queranschlag 53 ist die Stützplatte nicht eingezeichnet, dafür ist der zum Verschieben des Queranschlags 53 vorgesehene Hydraulikzylinder 54 ersichtlich. Der jeweilige Hydraulikzylinder soll eine Kraft von zumindest 5 KN, insbesondere zumindest 15 KN in Richtung des zugeordneten Anschlags ausüben können, damit sichergestellt werden kann, dass ggf. verschobene und/oder verdrehte Palettenteile, insbesondere Verbindungsklötze und/oder Bodenbretter, in ihre Sollposition gedrückt werden können.

Die Fig. 4 zeigt die Vorrichtung 10 mit einer darin aufgenommenen Palette 1 im Wirkzustand. Wirkzustand bedeutet, dass die Palette 1 in der Vorrichtung eingespannt ist, indem sämtliche verschiebbaren Anschläge mittels des zugehörigen Druckzylinders in ihre Wirkstellung verfahren sind. Wie ersichtlich, wird die Palette 1 durch die drei beweglichen Queranschläge 31, 33, 35, welche die Palette 1 in Querrichtung gegen die drei festen Queranschläge 17, 20, 23 drückt, zusammen mit dem beweglichen Längsanschlag 28, mittels welchem die Palette in Längsrichtung gegen den Längsanschlag 24 gedrückt wird, entlang ihres Umfanges fixiert bzw. ausgerichtet, so dass sichergestellt werden kann, dass die Aussenmasse der Palette innerhalb eines vorgegebenen Nennmasses liegen. Zur Überwachung der Aussenmasse der Palette können ggf. zusätzliche Sensoren vorgesehen werden. Natürlich sind im Wirkzustand auch die übrigen, aus dieser Darstellung nicht ersichtlichen beweglichen Queranschläge in ihre jeweilige Wirkposition verschoben. Zudem wird durch das Zusammenwirken der beweglichen mit den festen Queranschlägen sichergestellt, dass sowohl die Bodenbretter wie auch die Verbindungsklötze zumindest quer zur Palettenlängsachse lagegerecht ausgerichtet und fixiert sind. In dem eingespannten Zustand der Palette können die einzelnen Palettenteile durch das Anbringen von neuen Verbindungselementen in ihrer Sollposition fixiert werden.

Somit kann durch die Vorrichtung im Zusammenhang mit dem Anbringen von neuen Verbindungselementen bewirkt werden, dass die Aussenmasse der Palette innerhalb eines vorgegebenen Nennmasses liegen und sämtliche Bodenbretter wie auch Verbindungsklötze parallel zueinander ausgerichtet und zumindest quer zu der Palettenlängsachse lagegerecht positioniert sind.

Vorzugsweise werden defekte Bodenbretter nicht einzeln ersetzt, sondern immer in der Form von Kufen, was den Vorteil hat, dass die neuen Verbindungselemente ausschliesslich von der Oberseite der Palette her angebracht werden können.

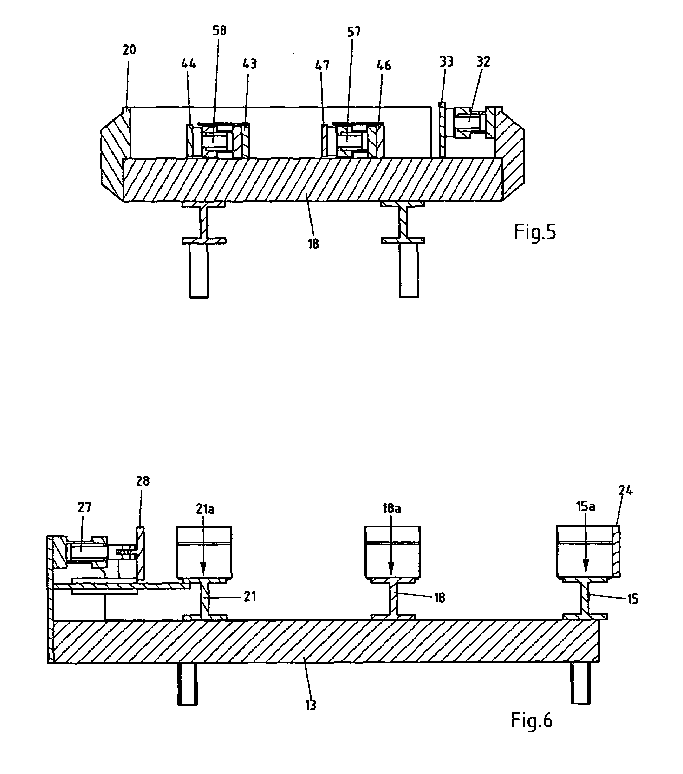

Aus der Fig. 5, welche die Vorrichtung gemäss Fig. 3 in einem durch den mittleren Querträger 18 verlaufenden Querschnitt zeigt, sind insbesondere die drei beweglichen Queranschläge 33, 47, 44 mit den zugehörigen hydraulischen Druckzylindern 32, 57, 58 sowie die drei feststehenden Queranschläge 46, 43, 20 ersichtlich. Die beweglichen Queranschläge 33, 47, 44 sowie die feststehenden Queranschläge 46, 43, 20 sind in einer Reihe angeordnet, so dass jeweils ein beweglicher Queranschlag mit einem feststehenden Queranschlag 33, 46; 47, 43; 44, 20 paarweise zusammenwirkt. In dieser Darstellung sind die beweglichen Queranschläge 33, 47, 44 in der zurückgezogenen Ruhestellung gezeigt. Wenn sich die Queranschläge 33, 47, 44 in der Ruhestellung befinden, kann eine Palette in die Vorrichtung eingelegt werden. Soll beispielsweise ein Bodenbrett oder eine Kufe ersetzt werden, so wird zuerst das Bodenbrett bzw. die Kufe an der vorgesehenen Position in die Vorrichtung eingesetzt und danach die teildemontierte Palette. Im weiteren ist ersichtlich, dass die inneren Queranschläge 46, 47, 43, 44 weniger hoch ausgebildet sind als die äusseren Queranschläge 33, 20. Im vorliegenden Beispiel sind die inneren Queranschläge 46, 47, 43, 44 um zumindest die Höhe eines Deck- und Querbretts einer Palette weniger hoch ausgebildet als die äusseren Queranschläge 33, 20. Zudem ist erkennbar, dass sich der jeweilige Hydraulikzylinder 57, 58 mit seiner Rückseite an einem feststehenden Queranschlag 46, 43 abstützt.

Fig. 6 zeigt die Vorrichtung gemäss Fig. 3 in einem durch den hinteren Längsträger 13 verlaufenden Längsschnitt. In dieser Darstellung ist erkennbar, dass die Oberseite 15a, 18a, 21 a des jeweiligen Querträgers 15, 18, 21 zugleich eine Auflagefläche bildet, auf welcher sich eine Palette mit ihren Bodenbrettern abstützen kann. Im weiteren sind der feststehende Längsanschlag 24 sowie der mittels zwei Hydraulikzylindern 27, 28 (Fig. 3) bewegliche Längsanschlag 28 ersichtlich.

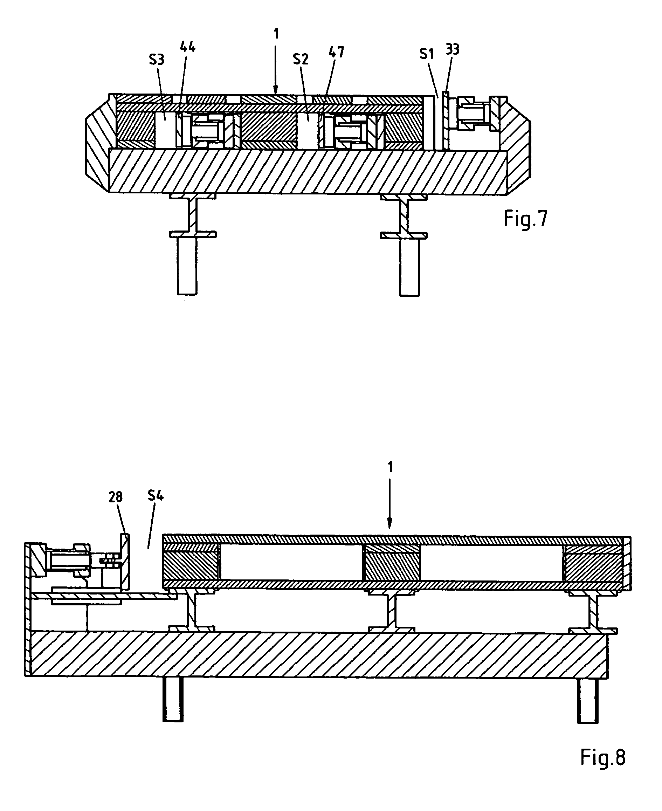

Die Fig. 7 zeigt die Vorrichtung in einem Querschnitt gemäss Fig. 5 zusammen mit einer darin aufgenommenen Palette 1. Da sich die beweglichen Queranschläge 33, 47, 44 in der zurückgezogenen Ruhestellung -Ausgangszustand- befinden, besteht zwischen dem jeweiligen Queranschlag 33, 47, 44 und dem entsprechenden Palettenteil jeweils ein Spalt S1, S2, S3.

Fig. 8 zeigt einen Längsschnitt durch die sich im Ausgangszustand befindliche Vorrichtung mit einer darin aufgenommene Palette. Zwischen der Stirnseite der Palette 1 und dem sich in der Ruhestellung befindlichen Queranschlag 28 besteht wiederum ein Spalt S4.

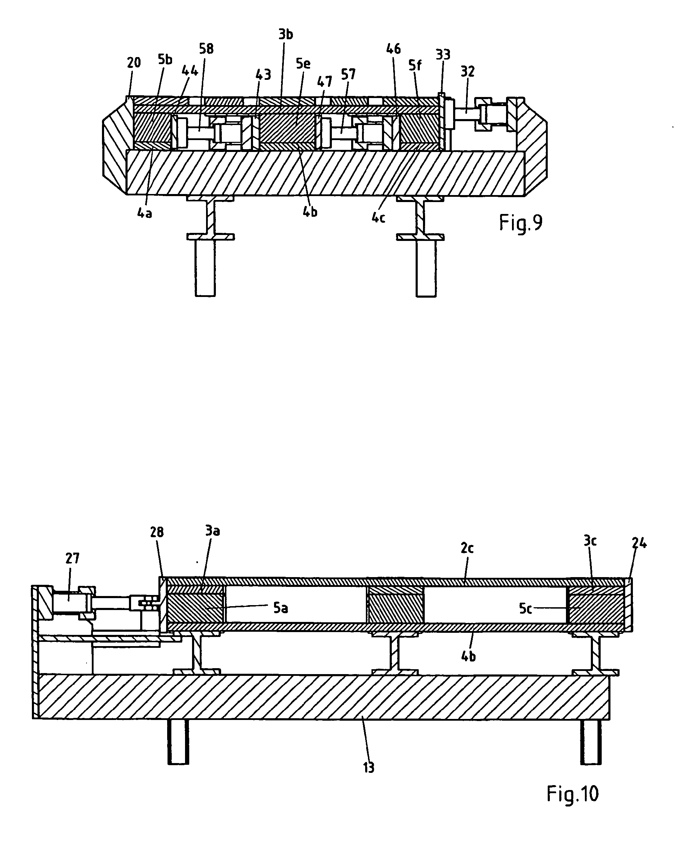

Fig. 9 zeigt einen Querschnitt durch die sich im Wirkzustand befindliche Vorrichtung mit einer darin aufgenommene Palette. In dieser Darstellung ist erkennbar, dass die beiden innen liegenden beweglichen Queranschläge 47, 44 jeweils ein Bodenbrett 4b, 4a sowie einen Verbindungsklotz 5e, 5b gegen den zugehörigen festen Queranschlag 43, 20 drücken, während der äussere bewegliche Queranschlag 33 das eine Bodenbrett 4c, sowie den zugehörigen Verbindungsklotz 5f gegen den benachbarten festen Queranschlag 46 drückt sowie das eine Querbrett 3b gegen den äusseren festen Queranschlag 20. Dadurch werden die drei Verbindungsklötze 5b, 5e, 5f zusammen mit den drei Bodenbrettern 4a, 4b, 4c quer zur Palettenlängsachse fixiert und positioniert.

Fig. 10 zeigt einen Längsschnitt durch die sich im Wirkzustand befindliche Vorrichtung mit einer darin aufgenommene Palette. Wie ersichtlich drückt der bewegliche Längsanschlag 28 sowohl das jeweilige Bodenbrett 4b wie auch das jeweilige Deckbrett 2c gegen den festen Längsanschlag 24. Zudem werden auch die randseitigen Verbindungsklötze 5a, 5c sowie die beiden aussen liegenden Querbretter 3a, 3c derart belastet, dass sie nicht nach aussen vorstehen.

Zusammenfassend kann festgehalten werden, dass sich defekte Paletten mit Hilfe dieser Vorrichtung einfach und schnell reparieren lassen, indem mit Hilfe der Vorrichtung die zu ersetzenden Palettenteile gegenüber der teildemontierten Palette ausgerichtet und fixiert werden können. Zudem wird sichergestellt, dass die für einen einwandfreien Zustand der Palette wesentlichen Palettenteile, namentlich die Bodenbretter sowie die Verbindungsklötze, mit Hilfe der Vorrichtung lagegerecht ausgerichtet und fixiert werden, so dass die genannten Palettenteile durch das Anbringen von neuen Verbindungselementen in der Sollposition festgenagelt bzw. mit den zugeordneten Palettenteilen verbunden werden können.

Ebenso eignet sich die Vorrichtung zur Reparatur sogenannter Lotterpaletten, bei denen keine Teile ersetzt werden müssen, sondern einzelne Palettenteile ggf. neu positioniert und in ihrer Solllage durch Anbringen neuer Verbindungselemente fixiert werden müssen. Jedenfalls sind die beweglichen Anschläge derart auf die festen Anschläge der Vorrichtung abgestimmt, dass auch allenfalls verschobene und/oder verdrehte Palettenteile, insbesondere Bodenbretter und/oder Verbindungsklötze, lagegerecht ausgerichtet werden, so dass sie nach dem Anbringen von neuen Verbindungselementen in ihrer Sollposition fixiert sind.

Vorzugsweise ist der Vorrichtung 10 eine Befestigungsvorrichtung zugeordnet, mittels welcher die neuen Verbindungselemente angebracht werden können. Eine solche Befestigungsvorrichtung kann beispielsweise aus einem einfachen, pneumatisch betriebenen, manuell zu betätigenden Nagelapparat bestehen. Ebenso kann natürlich ein vollautomatischer Befestigungsroboter vorgesehen werden.

### Bezugszeichenliste : Titel

- 1.: Palette
- 2.: Deckbretter
- 3.: Querbretter
- 4.: Bodenbretter
- 5.: Verbindungsklötze
- 6.: Nägel
- 7.:
- 8.:
- 9.:
- 10.: Vorrichtung
- 11.: vorderer Längsträger
- 12.: 12. Basisteil
- 13.: hinterer Längsträger
- 14.: Basisteil
- 15.: vorderer Querträger
- 16.: Basisteil
- 17.: fester Queranschlag
- 18.: mittlerer Querträger
- 19.: Basisteil
- 20.: fester Queranschlag
- 21.: hinterer Querträger
- 22.: Basisteil
- 23.: fester Queranschlag
- 24.: fester Längsanschlag
- 25.:
- 26.: Hydraulikzylinder
- 27.: Hydraulikzylinder
- 28.: beweglicher Längsanschlag
- 29.:
- 30.: Hydraulikzylinder
- 31.: beweglicher Queranschlag
- 32.: Hydraulikzylinder
- 33.: beweglicher Queranschlag
- 34.: Hydraulikzylinder
- 35.: beweglicher Queranschlag
- 36.:
- 37.: fester Queranschlag
- 38.: beweglicher Queranschlag
- 39.: Abstützplatte
- 40.: fester Queranschlag
- 41.: beweglicher Queranschlag
- 42.: Abstützplatte
- 43.: fester Queranschlag
- 44.: beweglicher Queranschlag
- 45.: Abstützplatte
- 46.: fester Queranschlag
- 47.: beweglicher Queranschlag
- 48.: Abstützplatte
- 49.: fester Queranschlag
- 50.: beweglicher Queranschlag
- 51.: Abstützplatte
- 52.: fester Queranschlag
- 53.: beweglicher Queranschlag
- 54.: Hydraulikzylinder
- 55.: 55.
- 56.:
- 57.:
- 58.:
- 59.:
- 60.:
- 61.:
- 62.:
- 63.:
- 64.:
- 65.:
- 66.:
- 67.:
- 68.:
- 69.:
- 70.:

## Patentansprüche

1. Vorrichtung (10) zum Ausrichten und/oder Fixieren von zu reparierende Paletten (1) und/oder Palettenteilen (8), wobei die Paletten (1) eine Mehrzahl von Deckbrettern (2a-2e), Querbrettern (3a-3c) und Bodenbrettern (4a-4c) umfassen und das jeweilige Bodenbrett (4a) mittels Verbindungsklötzen (5a-5c) mit den Querbrettern (3a-3c) verbunden ist, und wobei die genannten Palettenteile mittels Verbindungselementen (6), insbesondere Nägeln, zusammengehalten werden und die Vorrichtung (10) zumindest einen festen Queranschlag (17, 20, 23, 37, 40, 43, 46, 49, 52) und einen beweglichen Queranschlag (38, 44, 50, 41, 47, 53, 31, 33, 35) für jedes Bodenbrett und/oder jeden Verbindungsklotz aufweist, und wobei der bewegliche Queranschlag (38, 44, 50, 41, 47, 53, 31, 33, 35) das jeweilige Bodenbrett und/oder den jeweiligen Verbindungsklotz derart gegen den zugehörigen festen Queranschlag (17, 20, 23, 37, 40, 43, 46, 49, 52) zu drücken bestimmt ist, dass das jeweilige Bodenbrett bzw. der jeweilige Verbindungsklotz zumindest quer zur Palettenlängsachse (L1) positioniert und auch fixiert ist/sind, **dadurch gekennzeichnet, dass** die Vorrichtung (10) einen durch zwei feste Anschläge (17, 24) definierten Referenzpunkt für die Palette (1) aufweist, wobei die beiden den Referenzpunkt definierenden Anschläge (17, 24) um 90° zueinander versetzt sind und wobei den beiden den Referenzpunkt bildenden Anschlägen (17, 24) zumindest je ein beweglicher Längsanschlag (28) bzw. Querschlag (31) zugeordnet ist, mittels welchen die Palette entlang ihrer Aussenseiten gegen die den Referenzpunkt bildenden Anschläge (17, 24) drückbar ist.

2. Vorrichtung (10) nach Anspruch 1, **dadurch gekennzeichnet, dass** jedem festen Queranschlag (17, 20, 23, 37, 40, 43, 46, 49, 52) ein beweglicher Queranschlag (38, 44, 50, 41, 47, 53, 31, 33, 35) zugeordnet ist.

3. Vorrichtung (10) nach Anspruch 1 oder 2, **dadurch gekennzeichnet, dass** die Vorrichtung (10) für jeden Verbindungsklotz einen festen Queranschlag (17, 20, 23, 37, 40, 43, 46, 49, 52) und einen beweglichen Queranschlag (38, 44, 50, 41, 47, 53, 31, 33, 35) aufweist, wobei die Anschläge paarweise derart zusammenwirken, dass sie sowohl die Verbindungsklötze wie auch die Bodenbretter zumindest quer zur Palettenlängsachse (L1) positionieren und auch fixieren.

4. Vorrichtung (10) nach einem der vorhergehenden Ansprüche, **dadurch gekennzeichnet, dass** die Vorrichtung (10) zusätzlich zumindest einen festen Längsanschlag (24) und zumindest einen beweglichen Längsanschlag (28) aufweist, welche unter einem rechten Winkel zu den vorgängig genannten Queranschlägen angeordnet sind und insbesondere dazu bestimmt sind, die Masshaltigkeit der Palette in Längsrichtung zu definieren und/oder die Deckbretter und/oder die Bodenbretter in Richtung der Palettenlängsachse (L1) zu positionieren und fixieren.

5. Vorrichtung (10) nach einem der vorhergehenden Ansprüche, zum Fixieren und/oder Positionieren von Euro-Paletten, welche drei Bodenbretter sowie neun Verbindungsklötze aufweisen, **dadurch gekennzeichnet, dass** die Vorrichtung (10) neun feste Queranschläge (17, 20, 23, 37, 40, 43, 46, 49, 52) sowie neun bewegliche Queranschläge (38, 44, 50, 41, 47, 53, 31, 33, 35) aufweist, wobei die beweglichen Queranschläge (38, 44, 50, 41, 47, 53, 31, 33, 35) das jeweilige Bodenbrett und/oder die zugeordneten Verbindungsklötze und/oder die Querbretter derart gegen einen festen Anschlag zu drücken bestimmt sind, dass das jeweilige Bodenbrett und/oder die Verbindungsklötze und/oder die Querbretter quer zur Palettenlängsachse positioniert und auch fixiert ist/sind.

6. Vorrichtung (10) nach einem der vorhergehenden Ansprüche, **dadurch gekennzeichnet, dass** die Vorrichtung (10) eine rechteckige Aussparung zur Aufnahme der Palette aufweist, deren eine Längsseite durch zumindest einen festen Queranschlag (17, 20, 23) gebildet ist, während die andere Längsseite durch zumindest einen beweglichen Queranschlag (31, 33, 35) gebildet ist.

7. Vorrichtung (10) nach Anspruch 4 und 6, **dadurch gekennzeichnet, dass** die beiden Stirnseiten der Aussparung durch den zumindest einen festen Längsanschlag (24) und den zumindest einen beweglichen Längsanschlag (28) gebildet sind.

8. Vorrichtung (10) nach Anspruch 6 oder 7, **dadurch gekennzeichnet, dass** innerhalb der Aussparung zusätzliche feste Queranschläge (37, 40, 43, 46, 49, 52) sowie zusätzliche bewegliche Queranschläge (38, 41, 44, 47, 50, 53) angeordnet sind, welche niedriger sind als die die Aussparung begrenzenden äusseren Anschläge (17, 20, 23, 31, 33, 35, 24, 28).

9. Vorrichtung (10) nach Anspruch 4 und 6, **dadurch gekennzeichnet, dass** die eine Längsseite der Aussparung durch drei feste Queranschläge (17, 20, 23) gebildet ist, während die andere Längsseite der Aussparung durch drei bewegliche Queranschläge (31, 33, 35) gebildet ist, und dass die eine Stirnseite der Aussparung durch einen festen Längsanschlag (24) gebildet ist, während die andere Stirnseite durch einen beweglichen Längsanschlag (28) gebildet ist.

10. Vorrichtung (10) nach einem der vorhergehenden Ansprüche, **dadurch gekennzeichnet, dass** die beweglichen Anschläge (28, 31, 33, 35, 47, 44) mit zumindest je einem hydraulisch, pneumatisch oder elektromechanisch betätigbaren Druckzylinder (26, 27 30, 32, 34, 57, 58) verbunden sind, welche in Richtung des jeweils zugeordneten festen Anschlags (24, 40, 46, 52, 43, 20) eine Kraft von zumindest 5 KN, insbesondere zumindest 15 KN, auszuüben bestimmt sind.

## Claims

1. Apparatus (10) for aligning and/or fixing pallets (1) and/or pallet parts (8) which are to be repaired, wherein the pallets (1) comprise a plurality of top boards (2a-2e), transverse boards (3a-3c) and baseboards (4a-4c) and the respective baseboard (4a) is connected to the transverse boards (3a-3c) by means of connecting blocks (5a-5c), and wherein the abovementioned pallet parts are held together by means of connecting elements (6), in particular nails, and the apparatus (10) has at least one fixed transverse stop (17, 20, 23, 37, 40, 43, 46, 49, 52) and a movable transverse stop (38, 44, 50, 41, 47, 53, 31, 33, 35) for each baseboard and/or each connecting block, and wherein the movable transverse stop (38, 44, 50, 41, 47, 53, 31, 33, 35) is intended for pushing the respective baseboard and/or the respective connecting block against the associated fixed transverse stop (17, 20, 23, 37, 40, 43, 46, 49, 52) such that the respective baseboard and/or the respective connecting block are/is positioned and also fixed at least transversely to the longitudinal pallet axis (L1), **characterized in that** the apparatus (10) has a reference point for the pallet (1) defined by two fixed stops (17, 24), wherein the two reference-point-defining stops (17, 24) are offset through 90° in relation to one another, and wherein the two reference-point-forming stops (17, 24) are assigned at least a respective movable longitudinal stop (28) and transverse stop (31), by means of which the pallet can be pushed against the reference-point-forming stops (17, 24) along its outer sides.

2. Apparatus (10) according to Claim 1, **characterized in that** each fixed transverse stop (17, 20, 23, 37, 40, 43, 46, 49, 52) is assigned a movable transverse stop (38, 44, 50, 41, 47, 53, 31, 33, 35).

3. Apparatus (10) according to Claim 1 or 2, **characterized in that** the apparatus (10) has a fixed transverse stop (17, 20, 23, 37, 40, 43, 46, 49, 52) and a movable transverse stop (38, 44, 50, 41, 47, 53, 31, 33, 35) for each connecting block, wherein the stops interact in pairs such that they position and also fix both the connecting blocks and the baseboards at least transversely to the longitudinal pallet axis (L1).

4. Apparatus (10) according to one of the preceding claims, **characterized in that** the apparatus (10) has, in addition, at least one fixed longitudinal stop (24) and at least one movable longitudinal stop (28), which are arranged at right angles to the abovementioned transverse stops and are intended, in particular, to define the dimensional accuracy of the pallet in the longitudinal direction and/or to position and fix the top boards and/or the baseboards in the direction of the longitudinal pallet axis (L1).

5. Apparatus (10) according to one of the preceding claims for fixing and/or positioning Euro pallets having three baseboards and nine connecting blocks, **characterized in that** the apparatus (10) has nine fixed transverse stops (17, 20, 23, 37, 40, 43, 46, 49, 52) and nine movable transverse stops (38, 44, 50, 41, 47, 53, 31, 33, 35), wherein the movable transverse stops (38, 44, 50, 41, 47, 53, 31, 33, 35) are intended to push the respective baseboard and/or the associated connecting blocks and/or the transverse boards against a fixed stop such that the respective baseboard and/or the connecting blocks and/or the transverse boards are/is positioned and also fixed transversely to the longitudinal pallet axis.

6. Apparatus (10) according to one of the preceding claims, **characterized in that** the apparatus (10) has a rectangular recess for accommodating the pallet, one longitudinal side of this recess being formed by at least one fixed transverse stop (17, 20, 23), while the other longitudinal side is formed by at least one movable transverse stop (31, 33, 35).

7. Apparatus (10) according to Claims 4 and 6, **characterized in that** the two end sides of the recess are formed by the at least one fixed longitudinal stop (24) and the at least one movable longitudinal stop (28).

8. Apparatus (10) according to Claim 6 or 7, **characterized in that** the recess contains additional fixed transverse stops (37, 40, 43, 46, 49, 52) and additional movable transverse stops (38, 41, 44, 47, 50, 53), and these are lower than the recess-bounding outer stops (17, 20, 23, 31, 33, 35, 24, 28).

9. Apparatus (10) according to Claims 4 and 6, **characterized in that** the one longitudinal side of the recess is formed by three fixed transverse stops (17, 20, 23), while the other longitudinal side of the recess is formed by three movable transverse stops (31, 33, 35), and **in that** the one end side of the recess is formed by a fixed longitudinal stop (24), while the other end side is formed by a movable longitudinal stop (28).

10. Apparatus (10) according to one of the preceding claims, **characterized in that** the movable stops (28, 31, 33, 35, 47, 44) are connected to at least in each case one hydraulically, pneumatically or electromechanically actuable pressure cylinder (26, 27, 30, 32, 34, 57, 58), and these are intended to exert a force of at least 5 KN, in particular at least 15 KN, in the direction of the respectively associated fixed stop (24, 40, 46, 52, 43, 20).

## Revendications

1. Dispositif (10) d'alignement et/ou de fixation des palettes (1) et/ou des éléments de palettes (8) à réparer, les palettes (1) comprenant une pluralité de planches à recouvrement (2a-2e), de planches transversales (3a-3c) et de planches de fond (4a-4c), la planche de fond (4a) correspondante étant reliée aux planches transversales (3a-3c) au moyen de blocs de raccordement (5a-5c), les parties mentionnées des palettes étant maintenues ensemble au moyen d'éléments de raccordement (6), plus particulièrement de clous, le dispositif (10) présentant au moins une butée transversale fixe (17, 20, 23, 37, 40, 43, 46, 49, 52) et une butée transversale mobile (38, 44, 50, 41, 47, 53, 31, 33, 35) pour chaque planche de fond et/ou chaque bloc de raccordement, la butée transversale mobile (38, 44, 50, 41, 47, 53, 31, 33, 35) étant conçue pour appuyer la planche de fond correspondante et/ou le bloc de raccordement correspondant contre la butée transversale fixe correspondante (17, 20, 23, 37, 40, 43, 46, 49, 52), de sorte que la planche de fond correspondante ou le bloc de raccordement correspondant est/sont positionné(s) et également fixé(s) au moins transversalement par rapport à l'axe longitudinal de la palette (L1), **caractérisé en ce que** le dispositif (10) comporte un point de référence défini pour deux butées fixes (17, 24) pour la palette (1), les deux butées (17, 24) définissant les deux points de référence étant décalées de 90° l'une par rapport à l'autre et au moins une butée longitudinale (28) mobile ou une butée transversale (31), au moyen desquelles la palette peut être appuyée sur son côté extérieur contre les butées (17, 24) formant le point de référence, étant affectée aux deux butées (17, 24) formant le point de référence.

2. Dispositif (10) selon la revendication 1, **caractérisé en ce qu'**une butée transversale (38, 44, 50, 41, 47, 53, 31, 33, 35) mobile est affectée à chaque butée transversale (17, 20, 23, 37, 40, 43, 46, 49, 52) fixe.

3. Dispositif (10) selon la revendication 1 ou 2, **caractérisé en ce que** le dispositif (10) comporte pour chaque bloc de raccordement une butée transversale (17, 20, 23, 37, 40, 43, 46, 49, 52) fixe et une butée transversale (38, 44, 50, 41, 47, 53, 31, 33, 35) mobile, les butées agissant par paire, de sorte qu'elles positionnent et fixent aussi bien les blocs de raccordement que les planches de fond au moins transversalement par rapport à l'axe longitudinal (L1) de la palette.

4. Dispositif (10) selon l'une quelconque des revendications précédentes, **caractérisé en ce que** le dispositif (10) comporte au moins une butée longitudinale (24) fixe et au moins une butée longitudinale (28) mobile, lesquelles sont disposées à angle droit par rapport aux butées transversales mentionnées précédemment et sont plus particulièrement conçues pour définir la stabilité de la palette dans le sens de la longueur et/ou pour positionner et/ou fixer les planches à recouvrement et/ou les planches de fond dans le sens de l'axe longitudinal (L1) de la palette.

5. Dispositif (10) selon l'une quelconque des revendications précédentes, destiné à fixer et/ou à positionner des palettes Euro, lesquelles comportent trois planches de fond ainsi que neuf blocs de raccordement, **caractérisé en ce que** le dispositif (10) comporte neuf butées transversales (17, 20, 23, 37, 40, 43, 46, 49, 52) fixes ainsi que neuf butées transversales (38, 44, 50, 41, 47, 53, 31, 33, 35) mobiles, les butées transversales (38, 44, 50, 41, 47, 53, 31, 33, 35) mobiles étant conçues pour appuyer la planche de fond correspondante et/ou les blocs de raccordement qui leur sont affectés et/ou les planches transversales contre une butée fixe, de sorte que la planche de fond correspondante et/ou les blocs de raccordement et/ou les planches transversales sont positionnés et également fixés transversalement par rapport à l'axe longitudinal de la palette.

6. Dispositif (10) selon l'une quelconque des revendications précédentes, **caractérisé en ce que** le dispositif (10) comporte un évidement rectangulaire permettant de recevoir la palette, dont la longueur est formée par au moins une butée transversale (17, 20, 23) fixe, alors que l'autre longueur est formée par au moins une butée transversale (31, 33, 35) mobile.

7. Dispositif (10) selon la revendication 4 et 6, **caractérisé en ce que** les deux côtés de devant de l'évidement sont formés par au moins une butée longitudinale (24) fixe et au moins une butée longitudinale (28) mobile.

8. Dispositif (10) selon la revendication 6 ou 7, **caractérisé en ce que** des butées transversales (37, 40, 43, 46, 49, 52) fixes supplémentaires ainsi que des butées transversales (38, 41, 44, 47, 50, 53) mobiles supplémentaires sont disposées dans l'évidement, lesquelles sont plus petites que les butées (17, 20, 23, 31, 33, 35, 24, 28) extérieures délimitant l'évidement.

9. Dispositif (10) selon la revendication 4 et 6, **caractérisé en ce qu'**une longueur de l'évidement est formée par trois butées transversales (17, 20, 23) fixes, alors que l'autre longueur de l'évidement est formée par trois butées transversales (31, 33, 35) mobiles, et **en ce qu'**un côté de devant de l'évidement est formé par une butée longitudinale (24) fixe, alors que l'autre côté de devant est formé par une butée longitudinale (28) mobile.

10. Dispositif (10) selon l'une quelconque des revendications précédentes, **caractérisé en ce que** les butées (28, 31, 33, 35, 47, 44) mobiles sont chacune reliées à au moins un cylindre (26, 27, 30, 32, 34, 57, 58) hydraulique, pneumatique ou électromécanique, lesquels sont conçus pour exercer une force d'au moins 5 KN, plus particulièrement d'au moins 15 KN, dans la direction de la butée (24, 40, 46, 52, 43, 20) fixe affectée correspondante.
